# EUROPÄISCHE PATENTSCHRIFT

(11) **EP 1 845 297 B1**
(45) Veröffentlichungstag und Bekanntmachung des Hinweises auf die Patenterteilung: **05.08.2009**
(21) Anmeldenummer: 07006667.5
(22) Anmeldetag: 30.03.2007
(51) Int. Cl.: F16L 19/028, F16L 19/04

(54) **Bördelverschraubung**
Flange screw connection
Raccordement à évasement

(30) Priorität: 10.04.2006 DE 102006017087
(43) Veröffentlichungstag der Anmeldung: 17.10.2007
(73) Patentinhaber: Eifeler Maschinenbau GmbH, 53881 Euskirchen (DE)
(72) Erfinder: Kloss, Alexander, 50997 Köln (DE); Schorn-Gilson, Alfons, 53913 Swisttal-Oldendorf (DE); Jahns, Michael, 53881 Euskirchen (DE)
(74) Vertreter: Bauer, Dirk

(56) Entgegenhaltungen:
- DE-A1- 3 543 539
- US-A- 2 381 829
- US-A- 2 444 622

## Beschreibung

Die Erfindung betrifft eine Bördelverschraubung gemäß dem Oberbegriff des Anspruchs 1.

Derartige Bördelverschraubungen sind seit geraumer Zeit allgemein bekannt und vom Grundsatz her bewährt. Eine deratige Bördelverschraubung ist beispielweise aus der US 2 381 829 A bekannt. Eine besondere Problematik ergibt sich, wenn ein gebördeltes Rohr mit einem Anschlussstutzen gemäß dem so genannten "British Standard" (BS), bei dem die Anschlagfläche einen Kegelwinkel von 60° aufweist, verbunden werden soll.

Typischerweise werden derartige Anschlussstutzen nach dem British Standard dergestalt mit einem Rohr verbunden, dass an das Rohr ein besonderes Formstück angeschweißt wird. Dieses Formstück besitzt zum einen eine konische innere Mantelfläche an seiner dem Anschlussstutzen zugewandten Seite, die mit der kegeligen Anschlagfläche des Anschlussstutzens korrespondiert. Des Weiteren besitzt das Formstück einen Abschnitt mit einem Außengewinde sowie einen Außensechskant zum Gegenhalten. Beim Herstellen einer derartigen Verbindung wird eine am Anschlussstutzen befindliche Überwurfmutter in Form einer so genannten Drahtmutter mit ihrem Innengewinde mit dem hierzu passenden Außengewinde des angeschweißten Formstücks gekoppelt, wodurch das Formstück samt des Rohres gegen den Anschlusskörper gepresst wird, wodurch eine dichte Verbindung hergestellt wird.

Auch wenn sich das Prinzip des angeschweißten Formstücks grundsätzlich bewährt hat, besteht ein Nachteil darin, dass die Schweißverbindung nur mit großem Aufwand herstellbar ist, was eine Herstellung vor Ort auf einer Baustelle unmöglich macht. Des Weiteren ist es erforderlich, jede einzelne Schweißnaht nach ihrer Herstellung röntgentechnisch zu untersuchen, um etwaige Undichtigkeiten rechtzeitig festzustellen. Derartige Verschraubungen werden nämlich typischerweise für Hochdruck-Hydrauliksysteme mit Betriebsdrücken bis zu ca. 630 bar eingesetzt. Ein weiterer Nachteil der Schweißverbindung besteht auch darin, dass durch das Schweißen eine Materialversprödung eintritt so dass die Verbindung insbesondere bei einer dauerhaften Schwingungsbelastung nicht immer die gewünschte Dauerfestigkeit aufweist.

Der Ersatz des schweißtechnisch angesetzten Formstücks gegen ein aufgebördeltes Rohr ist aufgrund der besonderen Geometrie des im British Standard genormten Anschlussstutzens ohne weiteres nicht möglich: Insbesondere bei kleinen Durchmessern ist die Anschlagfläche des Anschlussstutzens sehr klein, da die Nut für den Dichtring einen gewissen Mindestplatzbedarf besitzt. Außerdem ist die der Stirnseite des Anschlussstutzens zugewandte Nutwandung im Bereich des Nutgrundes lediglich über einen sehr geringen Restquerschnitt mit dem übrigen Anschlussstutzen verbunden, so dass hier beim Anziehen einer ein herkömmliches aufgebördeltes Rohr aufweisenden Verbindung Brüche auftreten würden.

### Aufgabe

Der Erfindung liegt die Aufgabe zugrunde, einen Anschlussstutzen nach dem British Standard mit in der Anschlagfläche integriertem Dichtring mit einem aufgebördelten Rohr kombinieren zu können, ohne dass beim Anziehen der Verschraubung die Gefahr von Materialbrüchen besteht.

### Lösung

Ausgehend von einer Bördelverschraubung der eingangs beschriebenen Art wird diese Aufgabe erfindungsgemäß dadurch gelöst, dass die Anschlagfläche des Anschlussstutzens lediglich durch eine hinter der Nut des Dichtrings liegende Fläche des Anschlussstutzens gebildet wird und im endmontierten Zustand zwischen der inneren Mantelfläche der Bördeltulpe und einer Kante im Übergang von der Nut in die vordere Stirnfläche des Anschlussstutzens ein Spalt besteht.

Auf diese Weise wird erreicht, dass ausgehend von diesem handfest vormontierten Zustand beim weiteren Anziehen der Verschraubung eine Krafteinleitung in den Anschlussstutzen lediglich im hinteren Bereich, d.h. im Bereich der Anschlagfläche, und nicht im Bereich der mit dem Dichtring versehenen Nut und ebenfalls nicht im Bereich der sich daran in Richtung der Stirnfläche anschließenden Nutwandung erfolgt. Diese Bereiche sind nämlich aufgrund der besonderen Geometrie des genormten Anschlussstutzens vergleichsweise geschwächt, so dass ein Krafteinleitung dort zu übermäßigen Verformungen und sogar Materialbrüchen führen würde. Gemäß der Erfindung kommt somit die Bördeltulpe zunächst nur mit ihrem vorderen Abschnitt, d.h. im Bereich des größten Durchmessers, mit dem Anschlussstutzen in Kontakt, wo die Abstützung großer Kräfte unkritisch ist.

Erfindungsgemäß findet die Krafteinleitung in einem Bereich des Anschlussstutzens statt, in dem dieser aufgrund großdimensionierter Querschnitte sehr belastbar ist. Hierdurch kann der "empfindliche" Bereich der Nut und der sich in Richtung der Durchgangsbohrung in dem Anschlussstutzen anschließenden Wandung frei von Kräften und Momenten gehalten werden.

Vorzugsweise findet während des weiteren Anziehens der Verschraubung auch eine fortschreitende Kontaktierung der äußeren Mantelfläche der Bördeltulpe mit dem zunächst nicht berührten Bereich des Überwurfkörpers, d.h. dort wo sich an der inneren Mantelfläche der Bördeltulpe die Nut für den Dichtring befindet, statt. Hierdurch wird erreicht, dass der Dichtring hinreichend fest verpresst wird und somit seine Dichtwirkung voll entfalten kann. Die Kontaktierung im Bereich der Nut führt im endmontierten Zustand zu einer im Ergebnis großflächigen Krafteinleitung von dem Überwurfelement in die Bördeltulpe, so dass diese gut gegen unerwünschte Bewegung gesichert ist. Dabei wird auch im endmontierten Zustand ein Kontakt zwischen der der Stirnseite zugewandten Kante der Nutwandung und der inneren Mantelfläche der Bördeltulpe vermieden. Die Kraftübertragung von der Bördeltulpe selbst in den Anschlussstutzen erfolgt weiterhin in erster Linie über die im Bereich des großen Bördeltulpendurchmessers angeordnete Anschlagfläche des Anschlussstutzens.

Gemäß einer bevorzugten Ausgestaltung der erfindungsgemäßen Bördelverschraubung ist der Überwurfkörper eine mit einem Außengewinde versehene Überwurfschraube, die mit einem Innengewinde des Anschlussstutzens zusammenwirkt. Alternativ hierzu ist es aber gleichfalls denkbar, dass der Überwurfkörper eine mit einem Innengewinde versehene Überwurfmutter ist, die mit einem Außengewinde des Anschlussstutzens zusammenwirkt.

Eine Weiterbildung der Erfindung besteht darin, dass der Anschlussstutzen zweiteilig aufgebaut ist und eine äußere Überwurfmutter aufweist, die um ein inneres Hauptteil drehbar ist und über einen formschlüssig in die Überwurfmutter und das Hauptteil eingreifenden Drahtring mit dem Anschlussstutzen zugfest gekoppelt ist. Dies besitzt insofern den Vorteil, dass die mit der Bördeltulpe zusammenwirkende Überwurfschraube beim Anziehen der Verschraubung nicht gedreht werden muss, sondern dass die Drehung allein von der Überwurfmutter vollführt werden kann. Eine Drahtmutter bietet der Vorteil, dass diese auch bei einem beispielsweise fest in einem Hydraulikblock eingeschraubten Anschlussstutzen die Drehbarkeit gewährleistet.

Wenn das Überwurfelement eine Überwurfmutter ist, kann diese zweiteilig aufgebaut sein und einen inneren, relativ zu einem äußeren Hauptteil drehbaren Übertragungsring aufweisen, der axiale Kräfte von dem Hauptteil auf die Bördeltulpe überträgt. Auf diese Weise wird eine Trennung zwischen der Drehbewegung - ausgeführt lediglich von dem Hauptteil - und der Übertragung der Axialkräfte auf die Bördeltulpe - ausgeübt lediglich von dem Übertragungsring - erreicht werden. Hierdurch wird vermieden, dass im Falle der Drehung einer Überwurfmutter eine große axiale Kraftübertragung mit einer Drehbewegung der kraftübertragenden Fläche gekoppelt wird, was zur Gefahr einer Materialüberbeanspruchung bzw. Bauteilschädigung aufgrund der hohen Reibkräfte und daraus resultierenden Momente führe könnte.

Nach der Erfindung ist des Weiteren vorgesehen, dass der Kegelwinkel der inneren Mantelfläche des Überwurfkörpers im handfest vor montierten Zustand kleiner ist als oder ebenso groß ist wie der Kegelwinkel der äußeren Mantelfläche der Bördeltulpe. Hierdurch können die Kontaktierungsverhältnisse im handfest vor montierten Zustand der Bördelverschraubung besonders einfach realisiert werden.

Zu Erzielung der Krafteinleitung im Bereich der Anschlagfläche des Anschlussstutzens sollte der Kegelwinkel der inneren Mantelfläche des Überwurfkörpers kleiner sein als der Kegelwinkel der Anschlagfläche des Anschlussstutzens.

Um eine Verbesserung der Sicherheit gegenüber einem Herausreißen des Rohres aus der Rohrverbindung zu erreichen, kann die innere Mantelfläche des Übertragungskörpers in einem Bereich, mit dem sie im handfest vormontierten Zustand der äußeren Mantelfläche der Bördeltulpe in Kontakt steht, mit einem gegenüber der übrigen Mantelfläche vorstehenden Wulst versehen sein. Im Zuge des weiteren Anziehens der Bördelverschraubung gräbt sich dieser Wulst unter Verformung der Bördeltulpe in dieselbe ein, so dass eine gewisse Formschlussverbindung entsteht, die ein Herausziehen des aufgebördelten Rohres quasi unmöglich macht.

Um die Sicherung des gebördelten Rohres in der Verschraubung weiter zu steigern wird vorzugsweise vorgeschlagen, die innere Mantelfläche des Überwurfkörpers in einem Bereich, mit dem sie im handfest vormontierten Zustand mit der äußeren Mantelfläche außer Kontakt ist, mit einer Verzahnung zu versehen. Dieser verzahnte Bereich sollte im Zuge des weiteren Anziehens der Verschraubung in Kontakt mit der äußern Mantelfläche de Bördeltulpe geraten und sich dort in geringem Umfang eingraben. Hierdurch kann eine weitere Fläche mit einer formschlüssigen Verbindung zwischen Überwurfkörper und der Bördeltulpe erzielt werden.

Schließlich ist vorzugsweise noch vorgesehen, dass im endmontierten Zustand der Verschraubung sowohl der Wulst als auch die Verzahnung zumindest zum Teil in die äußere Mantelfläche der Bördeltulpe eingegraben sind. Die Kombination dieser beiden Sicherungen gegen unbeabsichtigtes Herausreißen des Rohres ist besonders wirksam, zumal diese Sicherungsmechanismen in unterschiedlichen Abschnitten der äußeren Mantelfläche der Bördeltulpe wirksam sind. Wenn sich die Bördeltulpe zumindest überwiegend in einem axialen Abschnitt der Bördelverschraubung befindet, in dem die Gewindeabschnitte des Anschlussstutzens und des Überwurfkörpers miteinander in Eingriff stehen, wird im Bereich radial außerhalb der Bördeltulpe eine sehr große Steifigkeit erzielt, so dass große radiale Umformkräfte erzeugt und abgestützt werden können.

Die Erfindung wird nachfolgend anhand mehrerer Ausführungsbeispiele einer Bördelverschraubung, die in der Zeichnung dargestellt sind, näher erläutert.

Es zeigt:
- Figur 1: eine aufgereihte Darstellung eines Anschlussstutzens mit Überwurfmutter, eines aufgebördelten Rohrendes sowie einer Überwurfschraube,
- Figur 2: eine Bördelverschraubung aus den Komponenten gemäß Figur 1 im handfest vormontierten Zustand,
- Figur 2a: eine Ausschnittsvergrößerung der Figur 2 im Bereich der Bördeltulpe,
- Figur 3: wie Figur 2, jedoch im endmontierten Zustand,
- Figur 3a: wie Figur 2a, jedoch im endmontierten Zustand,
- Figur 4: wie Figur 3, jedoch mit einer alternativ geformten Überwurfschraube,
- Figur 4a: wie Figur 3a, jedoch mit einer alternativ geformten Überwurfschraube,
- Figur 5: wie Figur 3, jedoch mit einer nochmals alternativ geformten Überwurfschraube,
- Figur 5a: wie Figur 3a, jedoch mit einer nochmals alternativ geformten Überwurfschraube,
- Figur 6: eine Bördelverschraubung mit einem Anschlussstutzen mit Außengewinde sowie einer damit zusammenwirkenden Überwurfmutter mit einem Übertragungsring im endmontierten Zustand der Verschraubung,
- Figur 6a: eine Ausschnittsvergrößerung aus Figur 6 im Bereich der Bördeltulpe.

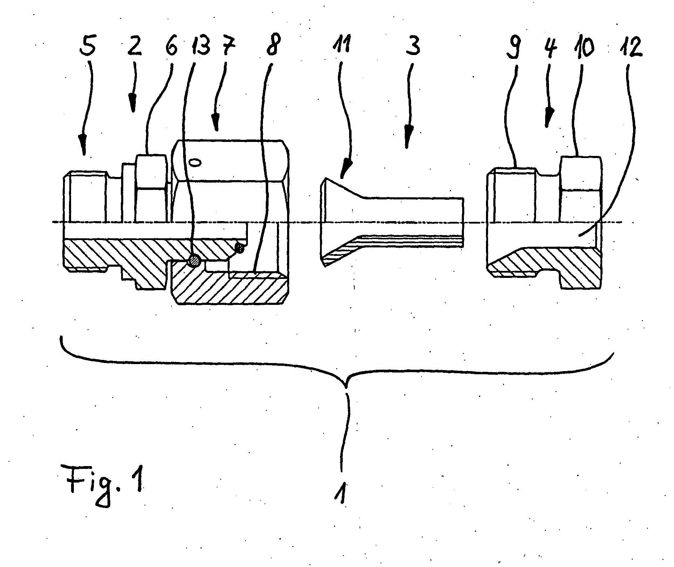

Figur 1 zeigt eine erfindungsgemäße Bördelverschraubung 1, bei der der Anschaulichkeit halber die einzelnen Komponenten nebeneinander aufgereiht dargestellt sind. Die Bördelverschraubung 1 umfasst einen Anschlussstutzen 2, ein Rohr 3, von dem lediglich ein kurzer Endabschnitt dargestellt ist, sowie eine Überwurfschraube 4. Der Anschlussstutzen 2 besitzt an seinem in der Zeichnung links dargestellten Ende einen Außengewindeabschnitt 5, anschließend einen Sechskant 6 und ferner eine Überwurfmutter 7 mit einem Innengewindeabschnitt 8. Dieser Innengewindeabschnitt 8 ist mit einem Außengewindeabschnitt 9 der Überwurfschraube 4 kompatibel, die im Übrigen ebenso wie der Anschlussstutzen 2 einen Sechskant 10 besitzt.

Ein Ende des Rohres 3 ist zu einer Bördeltulpe 11 umgeformt (aufgebördelt). Die Bördeltulpe 11 besitzt eine Kegelform und geht aus dem umverformten Rest des Rohres 3 hervor, dessen Außendurchmesser geringfügig kleiner als der Innendurchmesser der Durchgangsbohrung 12 der Überwurfschraube 4 ist, so dass die Überwurfschraube 4 auf dem Rohr 3 verschiebbar ist. Die Überwurfmutter 7 des Anschlussstutzens 2 ist als so genannte "Drahtmutter" ausgeführt, wobei ein ringförmig umlaufender, nachträglich eingeführter Drahtabschnitt 13 jeweils mit der Hälfte seines Querschnitts in einer halbkreisförmigen Nut in dem Anschlussstutzen 2 sowie einer ebenfalls halbkreisförmigen Nut in der Überwurfmutter 7 einliegt und dadurch eine gegen eine axiale Belastung feste Verbindung bildet, bei der die Drehbarkeit der Überwurfmuter 7 relativ zu dem Übrigen Anschlussstutzen 2 erhalten bleibt.

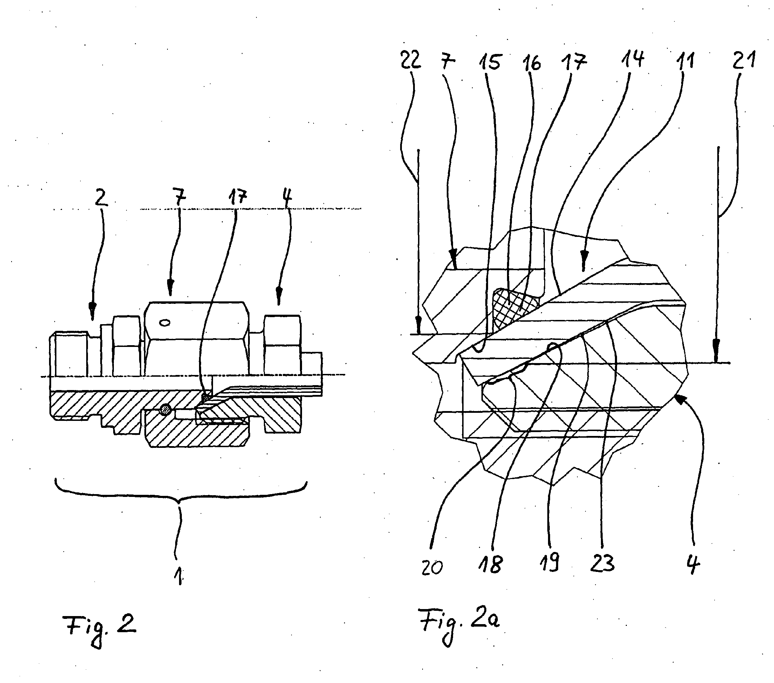

In Figur 2 ist die Rohrverbindung im so genannten vormontierten Zustand eingestellt. Dazu wird die Überwurfmutter 7 soweit auf die Überwurfschraube 4 aufgeschraubt, bis mit Hilfe des von Hand aufbringbaren Drehmoments kein Montagefortschritt mehr erzielbar ist. Aus der Vergrößerung gemäß der Figur 2a ergibt sich, dass eine innere Mantelfläche 14 der Bördeltulpe 11 einer Anschlagfläche 15 des Anschlussstutzens 7 anliegt. Der Kegelwinkel der Anschlagfläche 15 einerseits ist in der Praxis geringfügig kleiner als der Kegelwinkel der Mantelfläche 14 andererseits, so dass auf jeden Fall eine Anlage außen auf der Anschlagfläche 15 erreicht wird. Ein in eine im Querschnitt dreiecksförmige Nut 16 eingelegter Dichtring 17, der in seinem unbelasteten Ausgangszustand (siehe Figur 1) im Querschnitt kreisförmig ist, hat bereits im vormontierten Zustand aufgrund des leichten Drucks, der von der äußeren Mantelfläche 14 der Bördeltulpe 11 ausgeübt wird, eine abgerundet dreieckige Form angenommen.

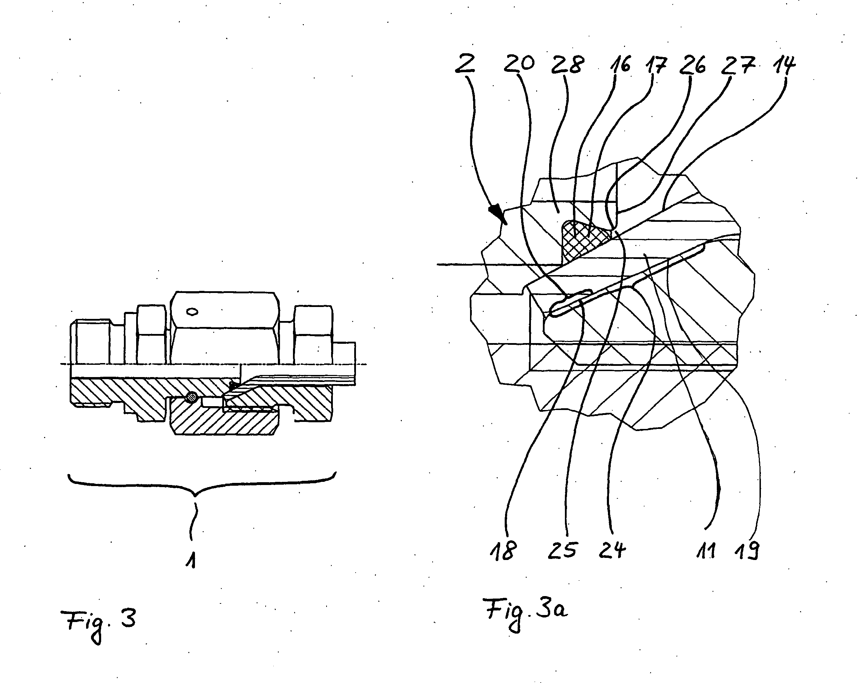

Die erfindungsgemäße Ausgestaltung besteht insbesondere darin, dass die Überwurfschraube 4 mit ihrer inneren Mantelfläche 18 die äußere Mantelfläche 19 der Bördeltulpe 11 lediglich in einem Bereich 20 kontaktiert, dessen kleinster Durchmesser 21 größer ist als der kleinste Durchmesser 22 der Anschlagfläche des Anschlagstutzens 7 bzw. der größte Durchmesser der Nut 16, d.h. der Durchmesser der der Anschlagfläche 15 zugewandten Nutkante. Die besonderen Kontaktierungsverhältnisse lassen sich auch sehr anschaulich anhand des zwischen der inneren Mantelfläche 18 der Überwurfmutter 4 und der äußeren Mantelfläche 19 der Bördeltulpe 11 bestehenden Spaltes 23 erkennten, der sich zum Auslauf der Bördeltulpe hin kontinuierlich vergrößert. Der Spalt resultiert aus leicht voneinander abweichenden Kegelwinkeln an der äußeren Mantelfläche 19 der Bördeltulpe 11 einerseits und der inneren Mantelfläche 18 der Überwurfschraube 4 andererseits. Die Winkeldifferenz beträgt ca. 1°, kann je nach den Umständen des Einzelfalls (Durchmesser der Verschraubung, Materialien, Wandstärken des Rohres) auch bis zu einige wenige Grad betragen. Figur 3 zeigt die Rohrverbindung 1 im endmontierten Zustand. Wie sich aus Figur 3a ergibt, ist der Endmontagezustand dann erreicht, wenn die Überwurfschraube 4 mit der gesamten Länge 24 ihrer inneren Mantelfläche 18 mit der äußeren Mantelfläche 19 der Bördeltulpe 11 in Berührung steht. Dabei kommt es - ausgehend von dem handfest vormontierten Zustand - infolge eines weiteren Drehens der Überwurfmutter 7 zu einem Eingraben der Überwurfschraube in dem vorderen Bereich 20, der im handfest vormontierten Zustand allein in Kontakt mit der äußeren Mantelfläche 19 der Bördeltulpe 11 war. Wichtig ist, dass auch im endmontierten Zustand die Ausrichtung der inneren Mantelfläche 14 der Bördeltulpe 11 im Wesentlichen unverändert bleibt, erfindungsgemäß, dass der Spalt 25 zwischen der inneren Mantelfläche 14 der Bördeltulpe 11 und der abgerundeten Kante 26 im Übergang von der Nut 16 in eine vordere Stirnfläche 27 des Anschlussstutzens 2 weiter besteht. Jedenfalls wird die innere Mantelfläche 14 der Bördeltulpe 11 lediglich so wenig verformt, dass keinerlei Kraftübertragung zwischen ihr und dem vorderen Nutrand stattfindet. Der erfindungsgemäß verbleibende Restspalt 25 verhindert eine Druckbelastung auf den Anschlussstutzen 2 in seinem vorderen Bereich und damit eine Schonung des in Bezug auf eine Materialbeschädigung kritischen Querschnitts 28. Der Dichtring 17 ist im endmontierten Zustand hinreichend fest in der Nut 16 verpresst, so dass auch der Spalt 25 keine negativen Auswirkungen auf die Dichtheit der vorliegenden Verschraubung hat.

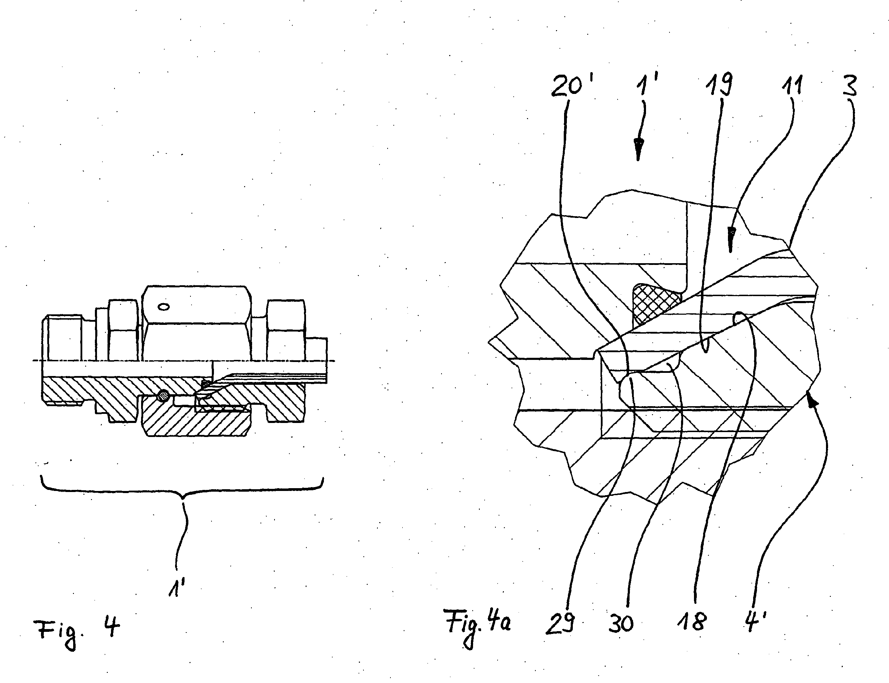

Die Figuren 4 und 4a zeigen eine Variante 1' der Bördelverschraubung, bei der die Überwurfmutter 4' an ihrer inneren Mantelfläche 18, und zwar dort im vorderen Abschnitt, d.h. in dem Bereich 20', in dem sie im handfest vormontierten Zustand mit der äußeren Mantelfläche 18 der Bördeltulpe 11 in Kontakt kommt, mit einen Wulst 29 versehen, der gegenüber der übrigen Mantelfläche 18 nach innen vorsteht. Zwischen dem Wulst 29 und dem konusförmigen Abschnitt der übrigen inneren Mantelfläche 18 der Überwurfschraube 4' befindet sich eine Vertiefung 30.

In den Figuren 4 und 4a ist lediglich die endmontierte Stellung der Komponenten zueinander gezeigt. In dieser Stellung ist der Wulst 29 soweit in die äußere Mantelfläche 19 der Bördeltulpe 11 eingegraben, dass auch der konische Abschnitt der inneren Mantelfläche 18 der Überwurfmutter 4' mit der äußeren Mantelfläche 19 der Bördeltulpe 11 in Berührung steht. Die so vorliegende sehr großflächige Abstützung der Bördeltulpe führt zu einer hohen Festigkeit der Rohrverbindung, insbesondere wird eine Bewegung des Rohres im Bereich der Bördeltulpe auch bei größeren äußeren Querkraft-Lasten auf das Rohr 3 verhindert. Des Weiteren verhindert der eingegrabene Wulst 29 dass das Rohr 3 unter Verformung der Bördeltulpe 11 aus der Verschraubung bei großer Längskraft-Einwirkung herausgerissen werden kann.

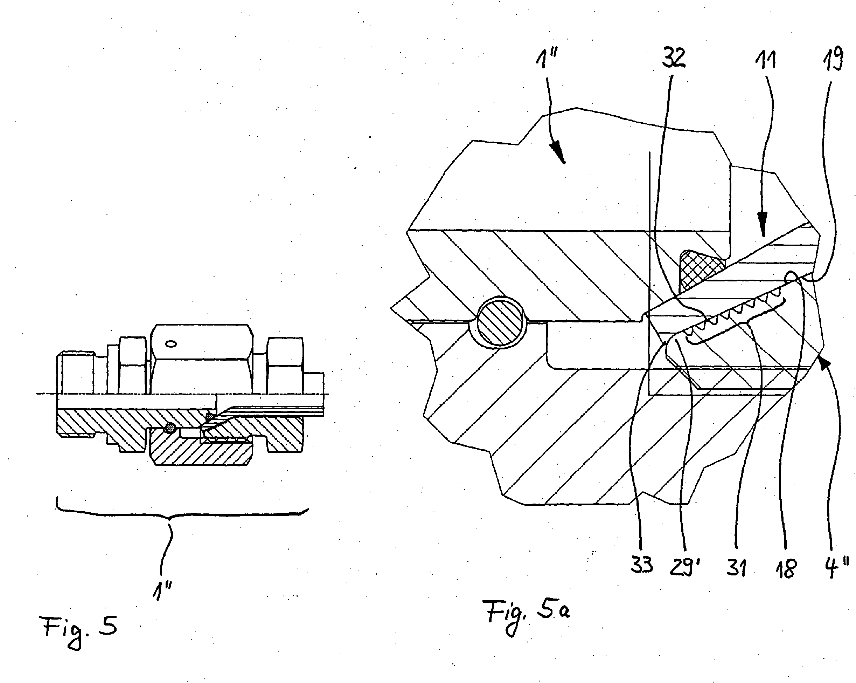

Eine Erhöhung der Sicherheit gegenüber einem Herausziehen des Rohres 3 kann alternativ (oder auch kumulativ) zu dem Wulst 29 gemäß den Figuren (4 und 4a) mit Hilfe der in den Figuren 5 und 5a gezeigten Ausführungsform erzielt werden. Die dort gezeigte Bördelverschraubung 1" umfasst eine alternative Überwurfschraube 4" die in einem Bereich 32 mit ihrer inneren Mantelfläche 18 mit einer Verzahnung 33 versehen ist. Während im handfest vormontierten Zustand der Verschraubung die innere Mantelfläche 18 der Überwurfschraube 4" lediglich im Bereich eines vorderen Wulstes 29' mit der äußeren Mantelfläche 19 der Bördeltulpe 11 in Kontakt steht, findet in diesem Bereich beim fortgesetzten Anziehen der Verschraubung ein Eingraben statt, so dass vor dem Wulst 29' - wie auch bei der Verschraubung gemäß den Figuren 4 und 4a - ein Aufwurf 33 entsteht" der ein Herausreißen des Rohres 3 verhindert. In dem endmontierten Zustand wie er in den Figuren 5 und 5a gezeigt ist, sind die Spitzen der Verzahnung 32 in die äußere Mantelfläche 18 der Bördeltulpe 11 eingegraben und verhindern so zusätzlich ein Herausziehen des Rohres 3.

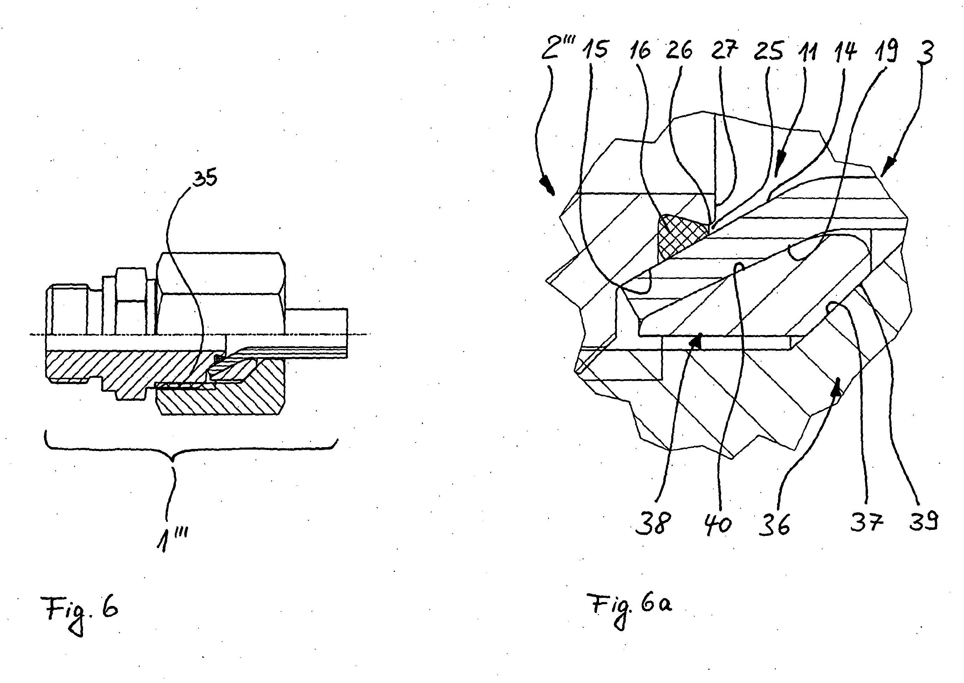

In den Figuren 6 und 6a ist eine weitere alternative Bördelverschraubung 1''' dargestellt. Bei dieser Variante besitzt der Anschlussstutzen 2''' beidseitig des Sechskants 6 einen Außengewindeabschnitt und zwar den Außengewindeabschnitt 5 (wie der Anschlussstutzen 2 auch) und den weitem Außengewindeabschnitt 34, der mit einem angepassten Innengewindeabschnitt 35 einer Überwurfmutter 36 zusammenwirkt. Die Überwurfmutter 36 besitzt eine Durchgangsbohrung, die geringfügig größer als der Außendurchmesser des Rohres 3 ist. Zwischen einer konischen inneren Mantelfläche 37 der Überwurfmutter 36 und der Bördeltulpe 11 befindet sich ein Übertragungsring 38, der zusammen mit der Überwurfmutter 36 als Übertragungskörper zur axialen und radialen Krafteinleitung in den Anschlussstutzen 2''' dient. Während die rückseitige äußere Mantelfläche 39 des Übertragungsrings 38 denselben Kegelwinkel wie die innere Mantelfläche 37 der Überwurfmutter 36 aufweist (nämlich 45°), besteht im handfest vormontierten Zustand zwischen der inneren Mantelfläche 40 des Übertragungsrings 38 und der äußeren Mantelfläche 19 der Bördeltulpe 11 die bereits anhand der Figur 2a erläuterte Winkeldifferenz. Diese Winkeldifferenz, die in Figur 6a nicht mehr sichtbar ist, wird im Zuge des weiteren Anziehens der Schraube bis zum endmontierten Zustand dadurch ausgeglichen, dass im vorderen Bereich, des Übertragungsrings 38 dem im Querschnitt die Anschlagfläche 15 des Anschlussstutzens 2''' senkrecht gegenüber liegt, ein Umformvorgang stattfindet, der das Material der Bördeltulpe 11 in geringem Umfang fließen lässt, so dass nach Abschluss der Montage im Wesentlichen die gesamte äußere Mantelfläche 19 der Bördeltulpe 11 mit der inneren Mantelfläche 40 des Übertragungsrings 38 in Kontakt steht. Auch hier besteht zwischen der abgerundeten Kante 26 im Übergang der Nut 16 zur vorderen Stirnfläche 27 des Anschlussstutzens 2''' und der inneren Mantelfläche 14 der Bördeltulpe 11 ein Spalt 25 der ein Abscheren des kritischsten, kleinsten Querschnitts des Anschlussstutzens 2''' im Bereich des Nutgrundes sicher verhindert.

Selbstverständlich kann auch der Übertragungsring 38 mit einem vorderen Wulst entsprechend der in den Figuren 4, 4a oder einer Verzahnung entsprechend der Ausführungsform in den Figuren 5, 5a versehen sein.

### Bezugszeichenliste

- 1, 1', 1", 1''': Bördelverschraubung
- 2,2''': Anschlussstutzen
- 3: Rohr
- 4,4',4'': Überwurfschraube
- 5: Außengewindeabschnitt
- 6: Sechskant
- 7: Überwurfmutter (Drahtmutter)
- 8: Innengewindeabschnitt
- 9: Außengewindeabschnitt
- 10: Sechskant
- 11: Bördeltulpe
- 12: Durchgangsbohrung
- 13: Drahtabschnitt
- 14: Äußere Mantelfläche
- 15: Anschlagfläche
- 16: Nut
- 17: Dichtring
- 18: Innere Mantelfläche
- 19: Äußere Mantelfläche
- 20: Bereich
- 21: Durchmesser
- 22: Durchmesser
- 23: Spalt
- 24: Länge
- 25: Spalt
- 26: Kante
- 27: Stirnfläche
- 28: Querschnitt
- 29: Wulst
- 30: Vertiefung
- 31: Bereich
- 32: Verzahnung
- 33: Aufwurf
- 34: Außengewindeabschnitt
- 35: Innengewindeabschnitt
- 36: Überwurfmutter
- 37: Innere Mantelfläche
- 38: Übertragungsring
- 39: Äußere Mantelfläche
- 40: Innere Mantelfläche

## Patentansprüche

1. Bördelverschraubung (1, 1', 1", 1''') mit einem in einem Endabschnitt zu einer Bördeltulpe (11) aufgeweitetem Rohr (3), einem Anschlussstutzen (2, 2''') mit einer an einem Endabschnitt angeordneten kegeligen Anschlagfläche (15), an die sich in Richtung einer vorderen Stirnfläche (27) des Anschlussstutzens (2, 2''') hin eine Nut (16) für einen elastischen Dichtring (17) anschließt und an der das Rohr (3) mit einer inneren Mantelfläche (14) der Bördeltulpe (11) anliegt, wodurch im endmontierten Zustand der Verschraubung der Dichtring (17) in der Nut (16) verpresst wird, wobei des Weiteren die Bördeltulpe (11) mittels eines an ihrer äußeren Mantelfläche (19) angreifenden Überwurfkörpers, der über einen Gewindeabschnitt mit einem korrespondierenden Gewindeabschnitt an dem Anschlussstutzen (2, 2''') zusammenwirkt, im Zuge des Anziehens der Verschraubung gegen die Anschlagfläche (15) des Anschlussstutzens (2, 2''') pressbar ist, wobei im handfest vormontierten Zustand der Verschraubung eine innere Mantelfläche (18) des Überwurfkörpers die äußere Mantelfläche (19) der Bördeltulpe (11) lediglich in einem Bereich (20) kontaktiert, dessen kleinster Durchmesser (21) größer ist als der kleinste Durchmesser (22) der Anschlagfläche (15) des Anschlussstutzens (2, 2''') **dadurch gekennzeichnet, dass** die Anschlagfläche (15) des Anschlussstutzens (2, 2''') lediglich durch eine hinter der Nut (16) des Dichtrings (17) liegende Fläche des Anschlussstutzens (2, 2''') gebildet wird und im endmontierten Zustand zwischen der inneren Mantelfläche (14) der Bördeltulpe (11) und einer Kante (26) im Übergang von der Nut (16) in die vordere Stirnfläche (27) des Anschlussstutzens (2, 2''') ein Spalt (25) besteht.

2. Bördelverschraubung (1, 1', 1") nach Anspruch 1, **dadurch gekennzeichnet, dass** der Überwurfkörper eine mit einem Außengewindeabschnitt (9) versehene Überwurfschraube (4) ist, die mit einem Innengewindeabschnitt (8) des Anschlussstutzens (2, 2"') zusammenwirkt.

3. Bördelverschraubung (1"') nach Anspruch 1, **dadurch gekennzeichnet, dass** der Überwurfkörper eine mit einem Innengewindeabschnitt (35) versehene Überwurfmutter (36) ist, die mit einem Außengewindeabschnitt (34) des Anschlussstutzens (2''') zusammenwirkt.

4. Bördelverschraubung (1, 1', 1") nach Anspruch 1 oder 2, **dadurch gekennzeichnet, dass** der Anschlussstutzen (2) zweiteilig aufgebaut ist und eine äußere, um ein inneres Hauptteil drehbare Überwurfmutter (7) aufweist, die über einen formschlüssig in die Überwurfmutter (7) und das Hauptteil eingreifenden ringförmigen Drahtabschnitt (13) miteinander zugfest gekoppelt sind.

5. Bördelverschraubung (1''') nach Anspruch 3, **dadurch gekennzeichnet, dass** die Überwurfmutter (36) zweiteilig aufgebaut ist und einen inneren, relativ zu einem äußeren Hauptteil drehbaren Übertragungsring (38) aufweist, der axiale Kräfte von dem Hauptteil auf die Bördeltulpe (11) überträgt.

6. Bördelverschraubung (1, 1', 1", 1''') nach einem der Ansprüche 1 bis 5, **dadurch gekennzeichnet, dass** der Kegelwinkel der inneren Mantelfläche (18) des Übertragungskörpers im handfest vor montierten Zustand kleiner ist als der Kegelwinkel der äußeren Mantelfläche (19) der Bördeltulpe (11).

7. Bördelverschraubung (1, 1', 1", 1''') nach einem der Ansprüche 1 bis 6, **dadurch gekennzeichnet, dass** der Kegelwinkel der inneren Mantelfläche (18) des Übertragungskörpers kleiner ist als der Kegelwinkel der kegeligen Anschlagfläche (15) des Anschlussstutzens (2, 2''').

8. Bördelverschraubung (1') nach einem der Ansprüche 1 bis 7, **dadurch gekennzeichnet, dass** die innere Mantelfläche (18) des Übertragungskörpers in einem Bereich, in dem sie im handfest vormontierten Zustand mit der äußeren Mantelfläche (19) der Bördeltulpe (11) in Kontakt steht, mit einem gegenüber der übrigen Mantelfläche (18) nach innen vorstehenden Wulst (29) versehen ist.

9. Bördelverschraubung (1'') nach einem der Ansprüche 1 bis 8, **dadurch gekennzeichnet, dass** die innere Mantelfläche (18) des Überwurfkörpers in einem Bereich, in dem sie im handfest vormontierten Zustand mit der äußeren Mantelfläche (19) der Bördeltulpe (11) außer Kontakt steht, mit einer Verzahnung (32) versehen ist.

10. Bördelverschraubung (1") nach Anspruch 8 und 9, **dadurch gekennzeichnet, dass** im endmontierten Zustand der Wulst (29') und die Verzahnung (32) zumindest jeweils zum Teil in die äußere Mantelfläche (19) der Bördeltulpe (11) eingegraben sind.

11. Bördelverschraubung (1, 1', 1", 1''') nach einem der Ansprüche 1 bis 10, **dadurch gekennzeichnet, dass** sich eine Bördeltulpe (11) zumindest überwiegend in einem axialen Abschnitt der Bördelverschraubung (1) befindet, in dem die Gewindeabschnitte des Anschlussstutzens (2, 2"') und des Überwurfkörpers miteinander in Eingriff stehen.

12. Bördelverschraubung (1, 1', 1", 1''') nach einem der Ansprüche 1 bis 11, **dadurch gekennzeichnet, dass** der Überwurfkörper im Bereich der Bördeltulpe (11) mit einer durchgängig konischen inneren Mantelfläche (18) versehen ist.

## Claims

1. Flanged screw-fastening (1, 1', 1", 1''') with a tube (3), which is widened in an end section to form a flanged cup (11), a connection piece (2, 2''') with a conical stop face (15) which is arranged on an end section and on which a groove (16) for an elastic sealing ring (17) connects in the direction of a front end face (27) of the connection piece (2, 2''') and against which the tube (3) bears with an inner circumferential face (14) of the flanged cup (11), as a result of which the sealing ring (17) is pressed into the groove (16) when the screw-fastening is in its finally mounted state, wherein the flanged cup (11) can furthermore be pressed against the stop face (15) of the connection piece (2, 2''') while the screw-fastening is being tightened by means of a retaining body which acts on the outer circumferential face (19) of the flanged cup and interacts by means of a threaded section with a corresponding threaded section on the connection piece (2, 2'''), wherein an inner circumferential face (18) of the retaining body contacts the outer circumferential face (19) of the flanged cup (11) only in a region (20) whose smallest diameter (21) is greater than the smallest diameter (22) of the stop face (15) of the connection piece (2, 2''') when the screw-fastening is in its finger-tight, pre-mounted state, **characterised in that** the stop face (15) of the connection piece (2, 2''') is only formed by a face of the connection piece (2, 2'''), which face is situated behind the groove (16) of the sealing ring (17), and in the finally mounted state a gap (25) exists between the inner circumferential face (14) of the flanged cup (11) and an edge (26) in the transition from the groove (16) to the front end face (27) of the connection piece (2, 2''').

2. Flanged screw-fastening (1, 1', 1'') according to Claim 1, **characterised in that** the retaining body is a retaining screw (4) which is provided with an external threaded section (9) and interacts with an internal threaded section (8) of the connection piece (2, 2''').

3. Flanged screw-fastening (1''') according to Claim 1,
**characterised in that** the retaining body is a retaining screw (36) which is provided with an internal threaded section (35) and interacts with an external threaded section (34) of the connection piece (2''').

4. Flanged screw-fastening (1, 1', 1'') according to Claim 1 or 2, **characterised in that** the connection piece (2) is constructed in two parts and has an outer retaining nut (7) which can be rotated about an inner main part, which are coupled to each other with tensile strength by means of an annular wire section (13) which engages in a form-fitting manner in the retaining nut (7) and the main part.

5. Flanged screw-fastening (1''') according to Claim 3, **characterised in that** the retaining nut (36) is constructed in two parts and has an inner transmitting ring (38) which can be rotated relative to an outer main part and transmits axial forces from the main part to the flanged cup (11).

6. Flanged screw-fastening (1, 1', 1'', 1''') according to one of Claims 1 to 5, **characterised in that** the taper angle of the inner circumferential face (18) of the transmitting body is smaller in the finger-tight, pre-mounted state than the taper angle of the outer circumferential face (19) of the flanged cup (11).

7. Flanged screw-fastening (1, 1', 1'', 1''') according to one of Claims 1 to 6, **characterised in that** the taper angle of the inner circumferential face (18) of the transmitting body is smaller than the taper angle of the conical stop face (15) of the connection piece (2, 2''').

8. Flanged screw-fastening (1') according to one of Claims 1 to 7, **characterised in that** the inner circumferential face (18) of the transmitting body is provided in a region in which it is in contact with the outer circumferential face (19) of the flanged cup (11) in the finger-tight, pre-mounted state with a bead (29) which projects inwardly compared to the rest of the circumferential face (18).

9. Flanged screw-fastening (1'') according to one of Claims 1 to 8, **characterised in that** the inner circumferential face (18) of the transmitting body is provided with toothing (32) in a region in which it is not in contact with the outer circumferential face (19) of the flanged cup (11) in the finger-tight, pre-mounted state.

10. Flanged screw-fastening (1'') according to Claim 8 and 9, **characterised in that**, in the finally mounted state, the bead (29') and the toothing (32) are at least partially in each case sunk into the outer circumferential face (19) of the flanged cup (11).

11. Flanged screw-fastening (1, 1', 1'', 1''') according to one of Claims 1 to 10, **characterised in that** a flanged cup (11) is situated at least mostly in an axial section of the flanged screw-fastening (1), in which the threaded sections of the connection piece (2, 2''') and of the retaining body are engaged with each other.

12. Flanged screw-fastening (1, 1', 1'', 1''') according to one of Claims 1 to 11, **characterised in that** the retaining body is provided with a continuous conical inner circumferential face (18) in the region of the flanged cup (11).

## Revendications

1. Raccord à évasement (1, 1', 1'', 1''') comportant un tuyau (3) élargi dans une portion d'extrémité en un collet évasé (11), un embout de raccordement (2, 2''') comportant une surface de butée conique (15) disposée sur une portion d'extrémité, auquel se raccorde dans la direction de la surface frontale avant (27) de l'embout de raccordement (2,2''') une rainure (16) destinée à une bague d'étanchéité (17) élastique et sur lequel le tuyau (3) vient reposer par une surface de gaine intérieure (14) du collet évasé (11), moyennant quoi en l'état finalement monté du raccord la bague d'étanchéité (17) est pressée dans la rainure (16), moyennant quoi en outre le collet évasé (11) peut être pressé au moyen d'un corps de cran d'arrêt agissant sur la surface de gaine extérieure (19),qui coopère via une portion de filetage avec une portion de filetage correspondante sur l'embout de raccordement (2,2'''), au cours du serrage du raccord contre la surface de butée (15) de l'embout de raccordement (2,2'''), moyennant quoi en l'état prémonté manuellement du raccord une surface de gaine intérieure (18) du corps de cran d'arrêt contacte la surface de gaine extérieure (19) du collet évasé (11) uniquement dans une zone (20), dont le diamètre le plus petit (21) est plus grand que le diamètre le plus petit (22) de la surface de butée (15) de l'embout de raccordement (2,2'''), **caractérisé en ce que** la surface de butée (15) de l'embout de raccordement (2,2''') est formée uniquement par une surface de l'embout de raccordement (2,2''') située derrière la rainure (16) de la bague d'étanchéité (17) et constitue un interstice (25) en l'état finalement monté entre la surface de gaine intérieure (14) du collet évasé (11) et une arête (26) dans la transition de la rainure (16) à la surface frontale avant (27) de l'embout de raccordement (2,2''').

2. Raccord à évasement (1,1',1'') selon la revendication 1, **caractérisé en ce que** le corps de cran d'arrêt est une vis à cran d'arrêt (4) pourvue d'une portion de filetage extérieure (9), qui coopère avec une portion de filetage intérieure (8) de l'embout de raccordement (2,2''').

3. Raccord à évasement (1''') selon la revendication 1, **caractérisé en ce que** le corps de cran d'arrêt est un écrou à chapeau (36) pourvu d'une portion de filetage intérieure (35), qui coopère avec une portion de filetage extérieure (34) de l'embout de raccordement (2''').

4. Raccord à évasement (1,1',1'') selon la revendication 1 ou 2, **caractérisé en ce que** l'embout de raccordement (2) est conçu en deux parties et présente un écrou à chapeau (7) extérieur, rotatif autour d'une partie principale intérieure, qui sont couplés l'un à l'autre de manière résistante à la traction par l'intermédiaire d'une portion de fil (13) annulaire s'engageant par conjonction de forme dans l'écrou à chapeau (7) et la partie principale.

5. Raccord à évasement (1''') selon la revendication 3, **caractérisé en ce que** l'écrou à chapeau (36) est conçu en deux parties et présente un anneau de transmission (38) intérieur, rotatif relativement à une partie principale extérieure, qui transmet les forces axiales de la partie principale au collet évasé (11).

6. Raccord à évasement (1,1',1'',1''') selon une des revendications 1 à 5, **caractérisé en ce que** l'angle de cône de la surface de gaine intérieure (18) du corps de transmission en l'état prémonté manuellement est plus petit que l'angle de cône de la surface de gaine extérieure (19) du collet évasé (11).

7. Raccord à évasement (1,1',1''1''') selon une des revendications 1 à 6, **caractérisé en ce que** l'angle de cône de la surface de gaine intérieure (18) du corps de transmission est plus petit que l'angle de cône de la surface de butée conique (15) de l'embout de raccordement (2,2''').

8. Raccord à évasement (1') selon une des revendications 1 à 7, **caractérisé en ce que** la surface de gaine intérieure (18) du corps de transmission est pourvue dans une zone, dans laquelle elle est en contact en l'état prémonté manuellement avec la surface de gaine extérieure (19) du collet évasé (11), d'un bourrelet (29) faisant saillie vers l'intérieur par rapport à la surface de gaine (18) restante.

9. Raccord à évasement (1'') selon une des revendications 1 à 8, **caractérisé en ce que** la surface de gaine intérieure (18) du corps de cran d'arrêt est pourvue d'une denture (32) dans une zone, dans laquelle elle n'est pas en contact en l'état prémonté manuellement avec la surface de gaine extérieure (19) du collet évasé (11).

10. Raccord à évasement (1'') selon la revendication 8 et 9, **caractérisé en ce que** en l'état finalement monté , le bourrelet (29') et la denture (32) sont enfouis au moins respectivement partiellement dans la surface de gaine extérieure (19) du collet évasé (11).

11. Raccord à évasement (1,1',1'',1''') selon une des revendications 1 à 10, **caractérisé en ce que** un collet évasé (11) se trouve au moins principalement dans une portion axiale du raccord à évasement (1), dans laquelle les portions de filetage des embouts de raccordement (2,2''') et du corps de cran d'arrêt sont mises en prise l'une avec l'autre.

12. Raccord à évasement (1,1',1'',1''') selon une des revendications 1 à 11, **caractérisé en ce que** le corps de cran d'arrêt est pourvu au niveau du collet évasé (11) d'une surface de gaine intérieure (18) conique continue.
